# EUROPEAN PATENT APPLICATION

(11) **EP 2 609 810 A1**
(43) Date of publication of application: **03.07.2013**
(21) Application number: 11819939.7
(22) Date of filing: 24.08.2011
(51) Int. Cl.: A23C 9/14

(54) **LACTIC DRINK HAVING GOOD FLAVOR AND GOOD PHYSICAL PROPERTIES AND METHOD FOR PRODUCING SAME**

(30) Priority: 25.08.2010 JP 2010188892
(71) Applicant: Meiji Co., Ltd., Koto-ku Tokyo 136-8908 (JP)
(72) Inventor: HARA, Tomokazu, Odawara-shi Kanagawa 250-0862 (JP); TAKAGI, Nao, Odawara-shi Kanagawa 250-0862 (JP); HONDA, Takeshi, Odawara-shi Kanagawa 250-0862 (JP); ENDO, Azusa, Odawara-shi Kanagawa 250-0862 (JP); OMORI, Toshihiro, Odawara-shi Kanagawa 250-0862 (JP)
(74) Representative: Zech, Stefan Markus
(86) International application number: PCT/JP2011/068999
(87) International publication number: WO 2012/026476

(57) **Abstract**

The present invention provides a lactic drink having an improved flavor without controlling the components of the lactic drink. Disclosed is a lactic drink which comprises fat components showing at least two peaks in the particle size distribution of fat particles. Also disclosed is a method for producing a lactic drink, a method for improving flavor or a method for improving the dispersion properties of fat particles, each method comprising: (1) a step for microparticulating fat particles contained in raw milk to give a first raw milk which shows a peak in the particle size distribution of fat particles; (2) a step for microparticulating fat particles contained in raw milk to give a second raw milk which shows a peak in the particle size distribution of fat particles, said peak being different from the peak of the first raw milk; and (3) a step for blending the first raw milk with the second raw milk.

## Description

### [Technical Field]

The present invention relates to a novel dairy beverage, in particular a dairy beverage having good flavour, and a production method thereof.

### [Background Art]

The flavour of a dairy beverage largely depends on the components of its raw materials, so that modification of flavour is generally performed by addition and adjustment of raw materials. However, when a raw material component is added, the beverage cannot be sold with a label as milk or composition modified milk, and therefore flavour must be modified without addition of a raw material component.
In order to improve flavour of dairy beverages without addition of raw material components, a method has been proposed wherein deoxidizing treatment is performed prior to or after heat sterilization of dairy beverages, thereby suppressing odor from heating (Patent literature 1 and Patent literature 2); this is a method to improve flavour by preventing deterioration of the flavour.

As another method, when sterilization is performed using infusion-type direct heat sterilization method, a method to improve flavour by adjusting the furosin content, lactulose content, rennettability, absorbance, and average particle size of fat particles within predetermined ranges has been proposed (Patent literature 3); however, since examination and adjustment of many factors relating to flavour are necessary, the method is complex and not practical. In addition, the flavour itself does not suit various needs of consumers.

Meanwhile, in order to obtain flavour similar to that of dairy products, a method for producing a vegetable oil emulsifying composition having a wide range of particle size distribution of fat and oil, by mixing an emulsified liquid homogenized under high pressure with an emulsified liquid homogenized under lower pressure has been proposed (Patent literature 4); however, this method aims to achieve the flavour similar to that of dairy products using raw material components other than dairy products, and it does not involve improvement of the flavour of dairy beverages that already have a rich flavour. Beyond that, this method cannot answer various needs of consumers regarding the flavour of dairy beverages.

### [Citation List]

### Patent Literature

Patent literature 1: JP A 10-295341
Patent literature 2: JP A 2001-78665
Patent literature 3: JP A 2005-46140
Patent literature 4: JP A 10-127245

### [Summary of Invention]

### Problems to Be Solved by Invention

Although it has becomes possible to provide dairy beverages having improved flavour without odor from heating as described in the above Patent literatures 1 and 2, in recent years consumers' needs are diversifying and different flavours such as thick (rich) feel and refreshing (sharp) feel are preferred depending on the consumers' age, sex, region and season, and accordingly, provision of dairy beverages corresponding to these needs is desired.
Therefore, the aim of the present invention is to provide a dairy beverage having improved flavour without adjusting components of the dairy beverage.

### Means of Solving Problems

The inventors of the present invention have devoted themselves to solve the above problem, and have found that, upon focusing on the relationship between fat particle size (fat globule diameter) and flavour, a flavour can be freely designed by blending a dairy beverage having a fat particle size that provides a rich texture with a dairy beverage having a fat particle size that provides a refreshing feel; the inventors have further promoted the research and finally achieved the present invention.

Namely, the present invention relates to the following dairy beverage, a production method thereof, a method for improving the flavour of dairy beverages, and a method for improving the fat particle dispersibility of dairy beverages.
[1] A dairy beverage comprising a fat content showing at least two peaks in the particle size distribution of fat particles.
[2] The dairy beverage according to [1], which shows two peaks.
[3] The dairy beverage according to [1] or [2], wherein the peaks are present in the range between 0.4 µm and 0.6 µm inclusive and the range between 1.0 µm and 1.4 µm inclusive.
[4] The dairy beverage according to any one of [1] to [3], wherein the distance between the peaks is from 0.4 µm or more to 1.0 µm or less.
[5] The dairy beverage according to any one of [2] to [4], wherein the bottom value between the peaks is present in the range from greater than 0.6 µm to less than 1.0 µm.
[6] The dairy beverage according to any one of [3] to [5], wherein fat particles in the range between 0.4 µm and 0.6 µm inclusive account for 30-60 vol% of the fat content in the dairy beverage, and fat particles in the range between 1.0 µm and 1.4 µm inclusive account for 10-40 vol% of the fat content in the dairy beverage.
[7] The dairy beverage according to any one of [1] to [6], comprising no emulsifying agent.
[8] The dairy beverage according to [7], wherein the beverage is milk, composition modified milk or processed milk.
[9] A dairy beverage prepared by blending a first raw milk in which the average particle size of fat particles accounting for at least 30-60 vol% of the fat content in the raw milk is adjusted in the range between 0.4 µm and 0.6 µm inclusive, with a second raw milk in which the average particle size of fat particles accounting for at least 10-40 vol% of the fat content in the raw milk is adjusted in the range between 1.0 µm and 1.4 µm inclusive.
[10] The dairy beverage according to [9], wherein the mixture ratio of the first raw milk to the second raw milk is from 1:0.4 to 1:0.8.
[11] The dairy beverage according to [9], wherein the mixture ratio of the first raw milk to the second raw milk is from 1:1.2 to 1:1.6.
[12] A method for producing the dairy beverage according to any one of [1] to [11], comprising:
   (1) a step of microparticulation of fat particles contained in a raw milk to prepare a first raw milk having one peak in the particle size distribution of fat particles,
   (2) a step of microparticulation of fat particles contained in a raw milk to prepare a second raw milk having a peak that is different from the peak of the first raw milk,
   (3) a step of blending the first raw milk with the second raw milk.
[13] A method for improving flavour of a dairy beverage, comprising:
   (1) a step of microparticulation of fat particles contained in a raw milk to prepare a first raw milk having one peak in the particle size distribution of fat particles,
   (2) a step of microparticulation of fat particles contained in a raw milk to prepare a second raw milk having a peak that is different from the peak of the first raw milk,
   (3) a step of blending the first raw milk with the second raw milk.
[14] A method for improving dispersibility of fat particles in a dairy beverage, comprising:
   (1) a step of microparticulation of fat particles contained in a raw milk to prepare a first raw milk having one peak in the particle size distribution of fat particles,
   (2) a step of microparticulation of fat particles contained in a raw milk to prepare a second raw milk having a peak that is different from the peak of the first raw milk,
   (3) a step of blending the first raw milk with the second raw milk.

### Advantageous Effects of Invention

According to the present invention, by changing the particle size distribution of fat particles, flavour of a dairy beverage can be improved without changing the composition of the dairy beverage. In particular, due to the presence of at least two peaks in the particle size distribution of fat particles, a dairy beverage having excellent flavour, physical properties and quality, with stable buoyancy and (re)dispersibility of fat particles can be provided, while keeping both a thick (rich) feel and a refreshing (sharp) feel.

### [Brief Description of Drawings]

[Fig.1] Figure 1 is a diagram showing sensory evaluation of composition non-modified milk showing a single peak.
[Fig.2] Figure 2 is a diagram showing sensory evaluation of a milk of the present invention.
[Fig.3] Figure 3 is a diagram showing sensory evaluation of a milk of the present invention.
[Fig.4] Figure 4 is a diagram showing sensory evaluation of a milk of the present invention.
[Fig.5] Figure 5 is a diagram showing sensory evaluation of a milk of the present invention.
[Fig.6] Figure 6 is a diagram showing sensory evaluation of a milk of the present invention.
[Fig.7] Figure 7 is a diagram showing sensory evaluation of a milk of the present invention.
[Fig.8] Figure 8 is an image of the particle size distribution of a milk of the present invention.

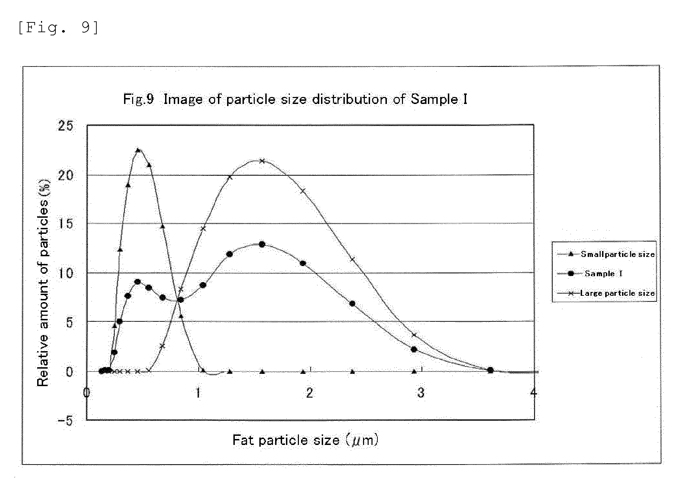

[Fig.9] Figure 9 is an image of the particle size distribution of a milk of the present invention.

### [Embodiments for Carrying out Invention]

The dairy beverage according to the present invention comprises a fat content showing at least two peaks in the particle size distribution of fat particles. More preferably, the dairy beverage claimed in the present invention shows two peaks.
Here, "dairy beverage" means a beverage having a fat content derived from raw milk, etc. as a raw material, and in particular, having a milk fat content; it may encompass beverages in the "milk and milk products as well as foods using these as principal ingredients" defined in the "Ministerial Ordinance on Milk and Milk Products Concerning Compositional Standards, etc." More specifically, the dairy beverage includes composition non-modified milk, special milk, composition modified milk, low fat milk, processed milk and milk drinks.

The particle size distribution of fat particles refers to a distribution of particle size of fat particles in the fat content present in the dairy beverages, and such distribution is not particularly limited as long as distribution is presented, and it may be expressed by, for example, a curve of abundance ratio relative to the axis of particle size of fat particles. Here, the abundance ratio may be typically expressed by using volume %, area %, weight % and count %, etc.
A peak of particle size distribution of fat particles means a local maximum value of an upward-convex curve (the apex) over the entire range or in any part of the range of the axis of particle size of fat particles (horizontal axis), which shows that an especially large number of fat particles with a specific particle size are present.

The dairy beverage of the present invention shows a particle size distribution of fat particles having, in order to provide a flavour of refreshing (sharp) feel, a peak preferably in the range between 0.40 µm and 0.70 µm inclusive, more preferably in the range between 0.40 µm and 0.60 µm inclusive, and furthermore preferably in the range between 0.40 µm and 0.50 µm inclusive; and in order to provide a flavour of thick (rich) feel, a peak is preferably in the range between 1.00 µm and 1.40 µm inclusive, more preferably in the range between 1.10 µm and 1.30 µm inclusive, and furthermore preferably in the range between 1.20 µm and 1.30 µm inclusive. The present invention enables to provide a good flavour of both of the refreshing feel derived from small fat particles and the thick feel derived from large fat particles without cancelling each other, by means of comprising fat particles showing at least two peaks in the particle size distribution, namely, comprising large contents of fat particles with both the small and large particle sizes.

Furthermore, the dairy beverage of the present invention needs to have co-existence off at particles with a large particle size and fat particles with a small particle size, in order to stabilize the dispersibility of fat particles. Typically, it is preferred to combine fat particles having a peak in the range between 1.00 µm and 1.40 µm inclusive with fat particles having a peak in the range between 0.40 µm and 0.70 µm inclusive; more preferably to combine those having a peak in the range between 1.10 µm and 1.30 µm inclusive with those having a peak in the range between 0.40 µm and 0.60 µm inclusive, and furthermore preferably to combine those having a peak in the range between 1.20 µm and 1.30 µm inclusive with those having a peak in the range between 0.40 µm and 0.50 µm inclusive.

In the dairy beverage of the present invention, it is more preferred that the distance between the peaks in the particle size distribution of fat particles is large in order to enhance the flavour of thick (rich) feel and refreshing (sharp) feel more clearly. In the present invention, the distance between the peaks is typically from 0.4 µm or more to 1.0 µm or less, preferably from 0.5 µm or more to 1.0 µm or less, more preferably from 0.6 µm or more to 1.0 µm or less, furthermore preferably from 0.7 µm or more to 1.0 µm or less, and most preferably from 0.8 µm or more to 1.0 µm or less.

The "bottom" of the particle size distribution of fat particles means, in the particle size distribution, a local minimum value of a downward-convex curve (the bottom point of the curve) over the entire range or in any part of the range of the axis of particle size of fat particles (horizontal axis), typically in the range between the two peaks, which shows that fat particles with a specific particle size are present with the smallest number between the two peaks.
In the present invention, by setting a bottom between the peaks in the predetermined range, it becomes possible to enhance the flavour and to stabilize fat particles. The bottom between the peaks is present, for example, in the range from more than 0.6 µm to less than 1.0 µm, preferably in the range from more than 0.65 µm to less than 0.95 µm, and more preferably in the range from more than 0.7 µm to less than 0.9 µm.

In the present invention, it is preferable that in the dairy beverage, fat particles with a small particle size account for 40-70 vol% and fat particles with a large particle size account for 30-60 vol% of the fat content. More specifically, it is preferable that fat particles with a diameter ranging from 0.4 µm or more to 0.6 µm or less account for 30-60 vol% of the fat content in the dairy beverage and fat particles with a diameter ranging from 1.0 µm or more to 1.4 µm or less account for 10-40 vol% of the fat content in the dairy beverage.

The dairy beverage of the present invention preferably does not comprise additives for flavour improvement and physical stabilization, such as emulsifying agents or stabilizers. Furthermore, the dairy beverage of the present invention is preferably milk, quality-governing milk or processed milk, and more preferably a drink in which only raw milk is used as a raw material.

The dairy beverage of the present invention can be produced by blending a first raw milk in which the average particle size of fat particles accounting for at least 30-60 vol% of the fat content in the raw milk is adjusted in the range between 0.4 µm and 0.6 µm inclusive, with a second raw milk in which (the average particle size of fat particles accounting for) at least 10-40 vol% of the fat content in the raw milk is adjusted.
Here, to enhance the flavour of thick (rich) feel, it can be achieved, for example, by adjusting the mixture ratio of the first raw milk to the second raw milk to be from around 1:0.4 to 1:0.8.
In addition, to enhance the flavour of refreshing (sharp) feel, it can be achieved, for example, by adjusting the mixture ratio of the first raw milk to the second raw milk to be from around 1:1.2 to 1:1.6.

Furthermore, the dairy beverage of the present invention can be produced by a production method comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.

In the present invention, a microparticulation process refers to a process of adjusting dimension (size) of fat particles so that they show a peak in the particle size distribution; such processing is not particularly limited, and includes, for example, homogenization using a homogenizer, etc., membrane emulsification using a filter, etc., emulsification using a homomixer, etc., and dispersion using a homodisper or static mixer, etc.

Furthermore, the present invention can improve the flavour of a dairy beverage by combining raw milks with predetermined particle sizes. For example, the present invention can improve (adjust) flavours such as thick (rich) feel and refreshing (sharp) feel, by a method comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.

Moreover, the present invention can improve the dispersibility of fat particles of a dairy beverage by combining raw milks with predetermined particle sizes. For example, the present invention can improve (adjust) dispersibility of fat particles of a dairy beverage, by a method comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.

Hereinafter, the present invention will be described in more detail based on examples; such examples are by way of example only, and do not intend to limit the present invention.

### <Examples>

### <Reference example 1> Sensory evaluation of composition non-modified milk showing a single peak in the particle size distribution of fat particles (flavour test)

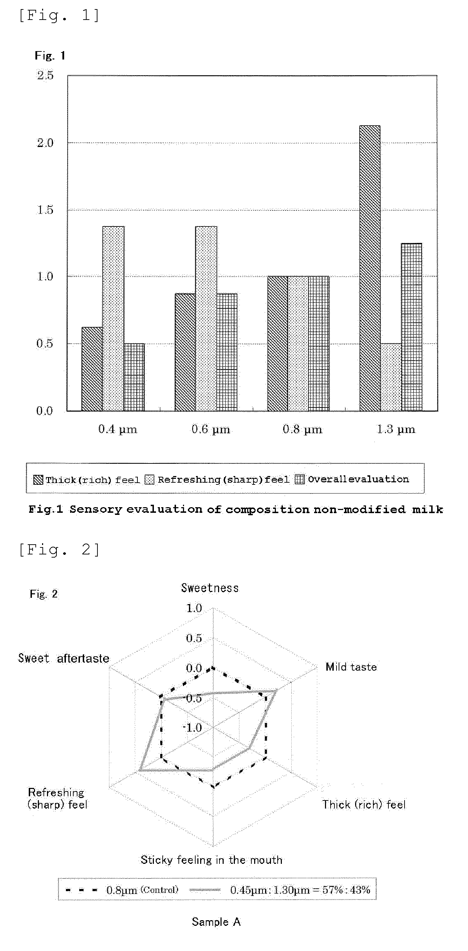

By adjusting the homogenization pressure of a homogenizer, milks having a single peak in the particle size distribution of fat particles with the following average fat particle sizes were prepared: approximately 0.4 µm (size: small), 0.6 µm (size: medium), 0.8 µm (control), 1.3 µm (size: large). Here, average fat particle size was measured using a laser diffraction particle size analyzer (SALD-2000, Shimadzu Corporation).
Using the milk having an average fat particle size of 0.8 µm (control) as a standard for sensory evaluation, which was set to be a value of "1," and the flavour of a milk was compared in terms of thick (rich) feel, refreshing (sharp) feel, and overall evaluation. Results are shown in Fig. 1 (28 panelists).
When the fat particle size of a milk was increased, thick feel improved. When the fat particle size of a milk was decreased, refreshing (sharp) feel improved, but the overall evaluation degraded.

### <Example 1> Preparation and sensory evaluation of milk having multiple peaks (flavour test)

Sample A: A milk (A1) wherein the average fat particle size was adjusted to be 0.45 µm by homogenization was blended with a milk (A2) wherein the average fat particle size was adjusted to be 1.30 µm by homogenization, at a ratio of A1 (0.45 µm): A2 (1.30 µm) = 57%:43%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample A showed an improved refreshing (sharp) feel while maintaining a thick (rich) feel (Fig. 2, 28 panelists).

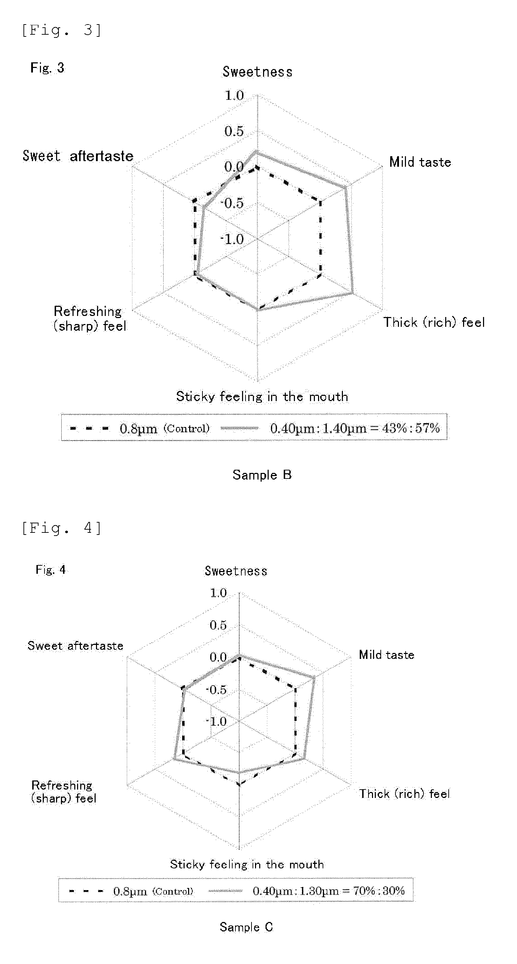

Sample B: A milk (B1) wherein the average fat particle size was adjusted to be 0.40 µm by homogenization was blended with a milk (B2) wherein the average fat particle size was adjusted to be 1.40 µm by homogenization, at a ratio of B1 (0.40 µm) :B2 (1.40 µm) = 43%: 57%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample B showed an improved thick (rich) feel while maintaining are refreshing (sharp) feel (Fig. 3, 28 panelists).

Sample C: A milk (C1) wherein the average fat particle size was adjusted to be 0.40 µm by homogenization was blended with a milk (C2) wherein the average fat particle size was adjusted to be 1.30 µm by homogenization, at a ratio of C1 (0.40 µm): C2 (1.30 µm) = 70%:30%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample C showed an improved thick (rich) feel and refreshing (sharp) feel (Fig. 4, 20 panelists).

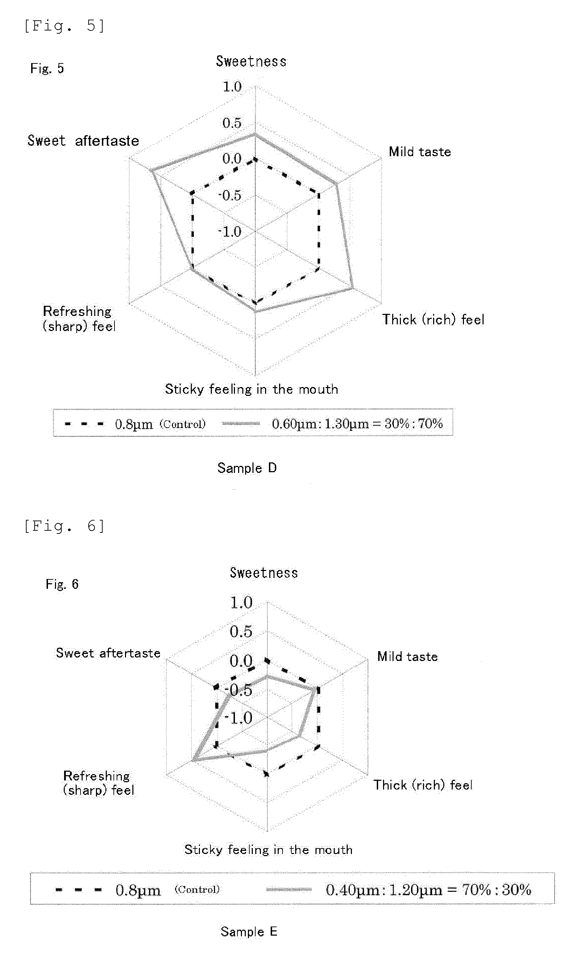

Sample D: A milk (D1) wherein the average fat particle size was adjusted to be 0.60 µm by homogenization was blended with a milk (D2) wherein the average fat particle size was adjusted to be 1.30 µm by homogenization, at a ratio of D1 (0.60 µm): D2 (1.30 µm) = 30%:70%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample D showed an improved thick (rich) feel while sufficiently maintaining a refreshing (sharp) feel (Fig. 5, 20 panelists).

Sample E: A milk (E1) wherein the average fat particle size was adjusted to be 0.40 µm by homogenization was blended with a milk (E2) wherein the average fat particle size was adjusted to be 1.20 µm by homogenization, at a ratio of E1 (0.40 µm): E2 (1.20 µm) = 70%:30%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample E showed an improved refreshing (sharp) feel while suppressing decreases in the thick (rich) feel and sweetness (Fig. 6, 18 panelists).

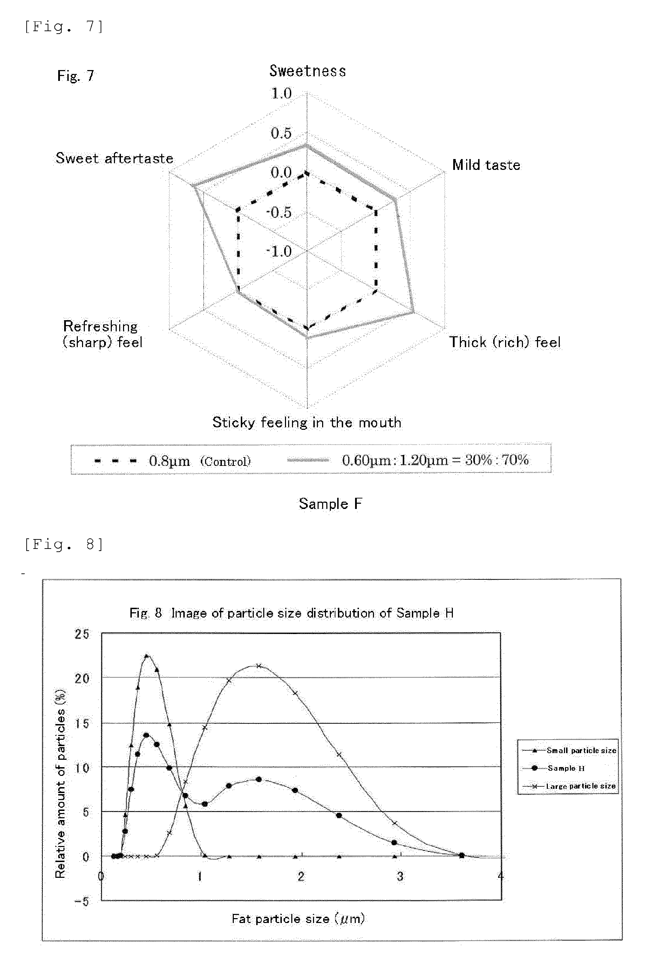

Sample F: A milk (F1) wherein the average fat particle size was adjusted to be 0.60 µm by homogenization was blended with a milk (F2) wherein the average fat particle size was adjusted to be 1.20 µm by homogenization, at a ratio of F1 (0.60 µm): F2 (1.20 µm) = 30%:70%, to produce (prepare) a milk having multiple (two) peaks in the fat particle size distribution.
Compared to the conventional milk showing a single peak in the particle size distribution of fat particles and having an average fat particle size of 0.8 µm, which was prepared in Reference example 1, the milk of sample F showed an improved thick (rich) feel while sufficiently maintaining a refreshing (sharp) feel (Fig. 7, 29 panelists).

### <Example 2> Evaluation of buoyancy of fat particles in milk (NIZO test)

Evaluation method of buoyancy of fat particles (fat globules) (NIZO test) : 25 mL each from a control sample A (0.80 µm) and control sample B (1.20 µm) having a single peak, as well as the samples A, B, E and F in Example 1 having two peaks were collected in a special container, centrifuged (276 G, 30 min, 60°C); then the fat concentration in the lower layer of 20 mL was measured, and used for the calculation of residual fat ratio (equivalent to 4-month storage) by evaluation relative to the fat concentration of each sample. Results are shown in Table 1.
[Table 1]

**Table 1**

| | Peak | Residual fat ratio (%) |
|---|---|---|
| Control sample A | 0. 80 *µ*m | 85 |
| Control sample B | 1. 20 *µ*m | 63 |
| Sample A | 0. 45 *µ*m and 1. 30 *µ*m | 80 |
| Sample B | 0. 40 *µ*m and 1. 40 *µ*m | 74 |
| Sample E | 0. 40 *µ*m and 1. 20 *µ*m | 90 |
| Sample F | 0. 60 *µ*m and 1. 20 *µ*m | 70 |

Both of the samples A and B prepared in Example 1 showed a dispersibility of fat similar to that of the conventional milk showing a single peak in the particle size distribution of fat particles and having an average fat particle size of 0.8 µm, which was prepared in Reference example 1.

### <Example 3> Evaluation of dispersibility of fat particles in milk (physical property test)

Sample G: A milk (G1) wherein the mode fat particle size was adjusted to be 0.40 µm by homogenization was blended with a milk (G2) wherein the mode fat particle size was adjusted to be 1.30 µm by homogenization, at a ratio of G1 (0.40 µm): G2 (1.30 µm) = 50%:50%, to produce (prepare) a milk having multiple (two) peaks in the fat particle size distribution.
Sample H: A milk (H1) wherein the mode fat particle size was adjusted to be 0.40 µm by homogenization was blended with a milk (H2) wherein the mode fat particle size was adjusted to be 1.40 µm by homogenization, at a ratio of H1 (0.40 µm): H2 (1.40 µm) = 50%:50%, to produce (prepare) a milk having multiple (two) peaks in the fat particle size distribution.
Sample I: A milk (I1) wherein the mode fat particle size was adjusted to be 0.40 µm by homogenization was blended with a milk (12) wherein the mode fat particle size was adjusted to be 1.40 µm by homogenization, at a ratio of I1 (0.40 µm): I2 (1.40 µm) = 43%:57%, to produce (prepare) a milk having multiple (two) peaks in the fat particle size distribution.

Evaluation method of (re)dispersibility of fat particles: Approximately 1 L from each of the samples E, F, G as well as control samples prepared in Reference example 1 were collected in a pet bottle (1.5 L), refrigerated (10°C) stationarily for 14 days or 21 days, then after stirring the liquid surface with a medicine spoon, the samples were passed through a mesh (mesh size: 100 mesh) and the residues on the mesh were visually observed. For samples with a low dispersibility of milk fat particles, fat particles that did not disperse in the liquid were observed on the mesh. Results are shown in Table 2.
[Table 2]

**Table 2**

| | **Fat redispersibility** | |
|---|---|---|
| Mode fat particle size [µm] | 14 day stationary storage | 21 days of stationary storage |
| Control sample A Single peak (0.80 µm) | ○ | ○ |
| Control sample B Single peak (1.20 µm) | ○ | × |
| Sample E 0.40 µm: 1.20 µm=70%: 30% | ○ | ○ |
| Sample F 0.60 µm: 1.20 *µ*m=30%: 70% | ○ | ○ |
| Sample G 0.40 µm: 1.30 *µ*m=50%: 50% | ○ | ○ |
| Sample H 0.40 µm: 1.40 *µ*m=50%: 50% | ○ | Δ |
| Sample I 0.40 µm: 1.40 *µ*m=43%: 57% | ○ | Δ |

| | | |
|---|---|---|
| ○: Good, Δ: Fat particles are slightly present, ×: Some fat particles are present | | |

### <Example 4> Particle size distribution of fat particles of milk

An image of distribution of the sample H (Fig. 7) and an image of distribution of the sample G (Fig. 8) both prepared in Example 3 were made by simulation based on the particle size distribution diagrams of the milk in which the mode fat particle size was adjusted to be 0.40 µm (small particle size), and of the milk in which the mode fat particle size was adjusted to be 1.40 µm (large particle size) by means of homogenization.

### [Industrial Applicability]

According to the present invention, a dairy beverage with improved flavour without changing the composition of conventional dairy beverages can be provided. More specifically, a dairy beverage which has good flavour and good physical properties as well as a thick (rich) feel and a refreshing (sharp) feel, while showing stable buoyancy and (re)dispersibility of fat particles can be provided.

## Claims

1. A dairy beverage comprising a fat content showing at least two peaks in the particle size distribution of fat particles.

2. The dairy beverage according to Claim 1, which shows two peaks.

3. The dairy beverage according to Claim 1 or 2, wherein the peaks are present in the range between 0.4 µm and 0.6 µm inclusive and the range between 1.0 µm and 1.4 µm inclusive.

4. The dairy beverage according to any one of Claims 1 to 3, wherein the distance between the peaks is from 0.4 µm or more to 1.0 µm or less.

5. The dairy beverage according to any one of Claims 2 to 4, wherein the bottom value between the peaks is present in the range from greater than 0.6 µm to less than 1.0 µm.

6. The dairy beverage according to any one of Claims 3 to 5, wherein fat particles in the range between 0.4 µm and 0.6 µm inclusive account for 30-60 vol% of the fat content in the dairy beverage, and fat particles in the range between 1.0 µm and 1.4 µm inclusive account for 10-40 vol% of the fat content in the dairy beverage.

7. The dairy beverage according to any one of Claims 1 to 6, comprising no emulsifying agent.

8. The dairy beverage according to Claim 7, wherein the beverage is milk, quality-governing milk or processed milk.

9. A dairy beverage prepared by blending a first raw milk in which the average particle size of fat particles accounting for at least 30-60 vol% of the fat content in the raw milk is adjusted in the range between 0.4 µm and 0.6 µm inclusive, with a second raw milk in which the average particle size of fat particles accounting for at least 10-40 vol% of the fat content in the raw milk is adjusted in the range between 1.0 µm and 1.4 µm inclusive.

10. The dairy beverage according to Claim 9, wherein the mixture ratio of the first raw milk to the second raw milk is from 1:0.4 to 1:0.8.

11. The dairy beverage according to Claim 9, wherein the mixture ratio of the first raw milk to the second raw milk is from 1:1.2 to 1:1.6.

12. A method for producing the dairy beverage according to any one of Claims 1 to 11, comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.

13. A method for improving flavour of a dairy beverage, comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.

14. A method for improving dispersibility of fat particles in a dairy beverage, comprising:
(1) a step of microparticulation of fat particles contained in a raw milk to prepare a first raw milk having one peak in the particle size distribution of fat particles,
(2) a step of microparticulation of fat particles contained in a raw milk to prepare a second raw milk having a peak that is different from the peak of the first raw milk,
(3) a step of blending the first raw milk with the second raw milk.
